# EUROPÄISCHE PATENTSCHRIFT

(11) **EP 0 806 130 B1**
(45) Veröffentlichungstag und Bekanntmachung des Hinweises auf die Patenterteilung: **25.07.2001**
(21) Anmeldenummer: 97107389.5
(22) Anmeldetag: 05.05.1997
(51) Int. Cl.: A01B 29/04

(54) **Walze insbesondere Packerwalze**
Roller, in particular packer roller
Rouleau, en particulier rouleaux de compactage

(30) Priorität: 09.05.1996 DE 29608451 U
(43) Veröffentlichungstag der Anmeldung: 12.11.1997
(73) Patentinhaber: Lemken GmbH & Co. KG, 46519 Alpen (DE)
(72) Erfinder: Gebbeken, Martin, 46519 Alpen (DE)
(74) Vertreter: Schulte, Jörg, Dipl.-Ing.

(56) Entgegenhaltungen:
- DE-A- 1 757 136
- DE-A- 2 618 841
- DE-U- 9 316 875
- FR-A- 2 547 696
- FR-A- 2 688 376
- US-A- 2 543 377
- US-A- 3 136 078
- US-A- 3 186 497
- US-A- 3 338 315
- US-A- 3 539 015

## Beschreibung

Die Erfindung betrifft eine Walze für die Bodenbearbeitung mit mehreren, um eine Achse drehbaren Ringen, deren schneidenförmig geformter Außenreif über Speichen mit der die Achse aufnehmenden Nabe verbunden ist und über in Achsrichtung beidseitig vom Außenreif abstehende und über den Umfang verteilt angeordnete Ansätze verfügt.

Derartige Walzen werden in der Regel als Nachlaufwalzen mit anderen Bodenbearbeitungsgeräten wie z. B. mit Kreiseleggen auf dem Acker eingesetzt. Dabei sind je nach vorgegebener Breite des Gesamtgerätes eine Vielzahl gleich ausgebildeter Ringe auf einer Achse angeordnet, wobei sie durch die seitlich abstehenden Ansätze angetrieben werden und so automatisch mitdrehen und den Boden entsprechend rückverfestigen. Bekannt sind z. B. sogenannte Crosskillringe für derartige Walzen, bei denen sowohl der Ring wie auch die seitlich abstehenden Ansätze aus Gußvollmaterial bestehen. Sie verfügen über ein hohes Eigengewicht. Die Ansätze und auch der Außenreif des Ringes verfügen über relativ steile Flanken, wobei sie einen spitzen Winkel von ca. 30° einschließen, um so die dickeren Erdbrocken zu zerschneiden und eine für die weitere Bearbeitung geeignete Oberfläche vorzugeben. Derartige Walzen durchschneiden zwar Kluten und Erdbrocken, sie verdichten den Boden allerdings unzureichend und können in mittleren Bodenverhältnissen auch nicht für eine ausreichende Tiefenführung sorgen, da sie wegen des spitzen Profils bzw. der spitzen Schneide tief in den Boden eindringen. Aufgrund des spitzen Profils des Außenreifes treten hohe Flächenpressungen bzw. Spreizkräfte auf, die bekanntlich ein Festbacken bzw. Ankleben von Erdreich begünstigen. Dieses Festbacken bzw. Ankleben von Erdreich schränkt den Einsatzbereich der sogenannten Crosskillwalzen ein. Bekannt sind auch sogenannte Packerstern- oder Prismenwalzen - DE-OS 35 41 543 und DE-PS 42 22 141 -, bei denen annähernd scheibenförmige Ringe, die über einen zu einer Seite hin schrägverlaufenden, gezackten Laufkranz verfügen. Diese besondere Form soll ein Zerkleinern des Bodens begünstigen und ein Festbacken von zum Kleben neigenden Böden verhindern. Dennoch führt die gezackte Form der Ringe dazu, daß sich die Räume zwischen den Zacken zusetzen und die Zähne praktisch unwirksam werden. Ein nachfolgendes Verstopfen ist die Konsequenz, da sich das Erdreich auch an den Seitenwänden festsetzt. Nachteilig ist aber neben dem Zusetzen der Ringe bzw. Walze, daß die gesamte Walze, die schon vom Konzept her schwer genug ist, aufgrund des durch daran anhaftenden Erdreichs nicht mehr funktionstüchtig ist und zusätzlich zu schwer wird. Dieses Gewicht kann praktisch nicht mehr problemlos gehändelt werden. Die gleichen Probleme treten bei dem krümelnden Gerät in Form einer Crosskillwalze gemäß US-PS 3 539 015 auf. Die einzelnen Ringe weisen einen rechteckförmigen Querschnitt auf, wobei allenfalls eine Abschrägung des äußeren Bereiches unter 90° vorgenommen wird. Die seitlich abstehenden Ansätze sind versetzt zueinander angeordnet, um den Krümeleffekt zu erhöhen. Die Ansätze sind als rechtwinklig von den Außenreifen abstehende Bleche verwirklicht. Die FR 2 547 696-A1 zeigt ein ähnliches Gerät, bei dem die Ansätze aus zwei einen Winkel von weit über 90° einschließenden Blechen gebildet sind. Als Ring dient einfach eine Scheibe mit einem rechteckigen Querschnitt.

Der Erfindung liegt daher die Aufgabe zugrunde, eine für die Bodenbearbeitung, vorzugsweise die Bodenrückverfestigung geeignete Walze zu schaffen, deren Ringe bei guter Rückverfestigung des Bodens nicht nur ein Ankleben des Erdreiches erschweren, sondern eine Selbstreinigung begünstigend geformt und die gleichzeitig für eine gute Tiefenführung des Gesamtgerätes problemlos einsetzbar sind.

Die Aufgabe wird gemäß der Erfindung dadurch gelöst, daß der schneidenförmige Außenreif einen trapezförmigen Querschnitt aufweist, wobei die Schrägflanken unter Belassung einer Kurzseite einen eine abgestumpfte Schneide bildenden Winkel von 50-70° einschließen und die Ansätze annähernd den gleichen Querschnitt aufweisend ausgebildet sind.

Diese besonders geformten Ringe eignen sich vorteilhaft für die verstopfungsfreie Rückverfestigung des Bodens, weil sie aufgrund ihrer relativ stumpfen Ausbildung den Boden gut andrücken bzw. rückverfestigen, ohne all zu tief in den Boden einzudringen. Der stumpfe Außenreif wie auch die stumpfen Ansätze sorgen für einen guten Antrieb und verhindern ein zu tiefes Eindringen in den Boden. Dadurch eignet sich eine derartige Walze vorteilhaft auch für die Tiefenführung des Gesamtgerätes bzw. der Gerätekombination. Weiter ist aufgrund der Formgebung des Außenreifes und der Ansätze sichergestellt, daß die Ringe sicher angetrieben werden.

Nach einer zweckmäßigen Ausbildung der Erfindung ist vorgesehen, daß der Außenreif im Bereich der Längsseite bzw. Innenseite einen offenen Querschnitt aufweist. Damit ist ein Ring geschaffen, der eine gute Rückverfestigung erreicht, der jedoch ein geringeres Gewicht besitzt. Die aus den Ringen hergestellte Walze ist daher leicht und daher gut handhabbar. Da die Walze mit einem Vorlaufgerät, z. B. mit einer Kreiselegge eingesetzt wird, die durch die Walze geführt und getragen wird, wird die Walze ohnehin ausreichend mit Gewicht belastet. Durch die besondere stumpfe Ausbildung von Außenreif und auch Ansätzen ist es möglich, relativ schmale Ringe einzusetzen, die einem Festbacken von Erdreich auf den Schrägflächen entgegenwirkt. Aufgrund der stumpfen Schneide wird einer Keilwirkung entgegengewirkt und die Flächenpressung wird reduziert. Dadurch wird einem Anbacken von Erdreich entgegengewirkt.

Eine der besonderen Aufgabenstellung besonders genügende Ausbildung ist die, bei der die Schrägflanken einen Winkel von 60° einschließend angeordnet und ausgebildet sind. Die Schrägflanken des Außenreifes sorgen wie schon erwähnt aufgrund des vorgegebenen Winkels für eine gute Rückverfestigung, ohne daß die Gefahr besteht, daß sich die einzelnen Ringe zusetzen bzw. zu tief in das Erdreich eindringen.

Weiter vorne ist bereits darauf hingewiesen worden, daß und wie die abgestumpfte Ausbildung des Trapezes sich für die Arbeit der Walze besonders auswirkt. Diese Trapezform mit den gezielten waagerechten Streifen bzw. Flächen sowohl im Bereich des eigentlichen Außenreifes wie auch der Ansätze führt zu einem "Andrükken" des Bodens, so daß die Walze wie schon weiter vorne erwähnt insbesondere auch für eine gute Tiefenführung sorgt. Besonders vorteilhaft ist dies, wenn die Kurzseite sowohl des Außenreifes wie auch des Ansatzes bzw. der Ansätze eine Länge von 5 bis 15 mm, vorzugsweise von 10 mm aufweist. Dabei sollte die Breite von Außenreif und Ansätzen im Bereich der Schneide 40 bis 70 mm, vorzugsweise 50 mm betragen. Aufgrund dieser besonderen Ausbildung bleibt für ein Anbacken von z. B. feuchtem Erdreich keine ausreichende Fläche, so daß eine gute "Selbstreinigung" möglich wird. Es verbleiben ausreichende Zwischenräume zwischen den Ringen, die das Vorsehen von zusätzlichen Abstreifern ermöglichen. Diese Ringe können auch so im Abstand zueinander eingesetzt werden, daß sie für eine nachfolgende Drillmaschine die Saatrille vorformen, in der die Sähschare laufen und das Saatgut ablegen. Dabei ist der Abstand der Ringe per Distanzringe bzw. -teile so einstellbar, daß sie dem Abstand der Drillreihen entsprechen.

Gegenüber den weiter vorn beschriebenen spitzen Ringen weist die neuerungsgemäße Walze Ringe auf, die nicht mehr als vier, vorzugsweise nur drei Speichen haben. Abgesehen von einer entsprechenden Gewichtsoptimierung hat diese Ausbildung den Vorteil, daß das Erdreich quasi keine Fläche findet, an der Erdreich festbacken kann. Dies wird durch die schlanke Ausbildung der Speichen zusätzlich begünstigt. Zusätzlich sind die Speichen in Achsrichtung im Nabenbereich breit und im Ringbereich schmal ausgebildet. Dies stellt sicher, daß der Ring mit seinen Speichen nicht zuviel Erdreich aufwühlt, jedoch statisch ausreichend stabil ausgeführt ist. Aufgrund der besonderen Formgebung eignet sich die Nabe besonders gut zur Tiefenführung. Dabei sieht die Erfindung vor, daß der Ring einen Außendurchmesser von nicht mehr als 600 mm, vorzugsweise von 500 mm aufweist.

Um einer Leichtbauweise möglichst optimal zu genügen, sieht die Erfindung vor, daß der hohl ausgebildete Ring eine Wandstärke von 5 bis 9 mm, vorzugsweise 7 mm aufweist. Ein derart ausgebildeter Außenreif bzw. Ring verfügt über die notwendige Stabilität, wobei die Ansätze von außen an den Außenreif angeformt bzw. zusammen mit diesem hergestellt sind. Das Gewicht eines derartigen Ringes kann durch Variation der Wandstärke vorgegeben werden.

Die Erfindung zeichnet sich insbesondere dadurch aus, daß eine Walze mit trapezförmigen Ringen geschaffen ist, die sowohl für die Rückverfestigung des Bodens bei weitgehender Selbstreinigung wie auch für weitere Funktionen derartiger Walzen wie Saatrillenformung und die Tiefeneinstellung optimal einsetzbar ist. Die Ringe verfügen über einen Außenreif, der nur über drei Speichen mit der Nabe verbunden ist, so daß weitgehende Freiräume erhalten bleiben. Der Außenreif selber baut relativ flach und ist zusätzlich über die trapezförmige Ausbildung mit flachen Kurzseiten bzw. Schneiden ebenso wie die Ansätze ausgerüstet, so daß darüber die gezielte Wirkungsweise derartiger Ringe sichergestellt werden kann.

Weitere Einzelheiten und Vorteile des Gegenstandes der Erfindung ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Seitenansicht eines Ringes mit Wiedergabe des Querschnittes,
- Fig. 2: einen Längsschnitt durch einen derartigen Ring im Bereich der Speichen,
- Fig. 3: eine Draufsicht auf den Außenreif des Ringes,
- Fig. 4: eine perspektivische Ansicht des Ringes und
- Fig. 5: einen Längsschnitt durch den Ring.

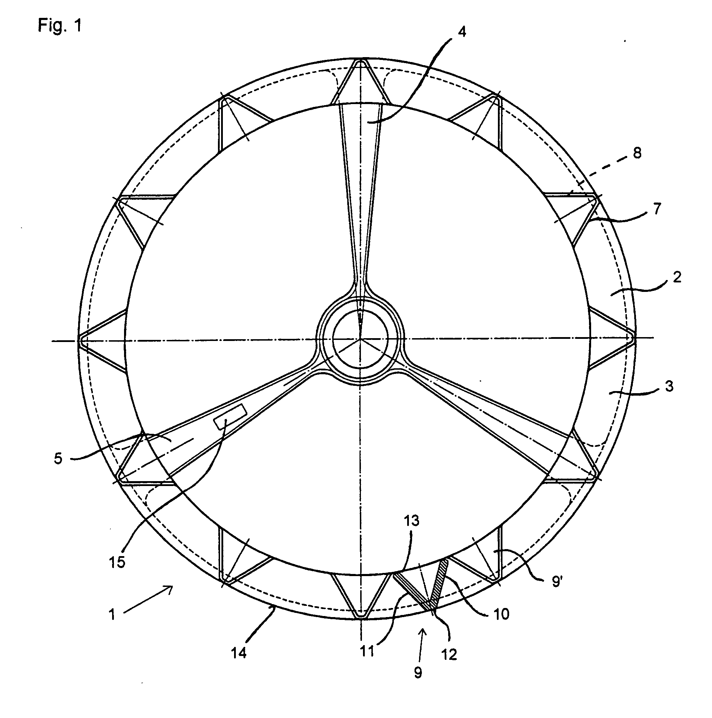

In Fig. 1 ist lediglich ein Ring 2 einer Walze 1 wiedergegeben, wobei mehrere derartiger Ringe 2 auf einer hier nicht wiedergegebenen Achse angeordnet werden können.

Der Ring 2 verfügt über einen Außenreif 3, dessen Form weiter hinten noch beschrieben wird, wobei dieser Außenreif 3 über Speichen 4, 5 mit der der hier nicht wiedergegebenen Achse zugeordneten Nabe 6 verbunden ist. Fig. 1 kann entnommen werden, daß die Speichen 4, 5 in den Außenreif 3 eingreifen, der als solcher trapezförmig ausgebildet ist. Der Außenreif 3 ist hohl ausgebildet.

Seitlich an den Außenreif 3 sind Ansätze 7, 8 angeformt, die die gleiche Form aufweisen, wie auch der Außenreif 3 als solcher.

Die Ansätze 7, 8 sind beidseitig des Außenreifes 3 seitlich vorstehend über den Umfang des Außenreifes 3 angeordnet und werden vorzugsweise in einem Herstellungsvorgang gegossen.

Ansätze 7, 8 und Außenreif 3 bzw. Ring 2 verfügen über den gleichen Außenquerschnitt 9, 9', wobei die Schrägflanken 10, 11 unter Belassung der Kurzseite 12 einen Winkel von rund 60° einschließen. Der Querschnitt 9 ist im Bereich der Längsseite 13 offen, so daß sich das weiter oben schon erwähnte Hohlprofil ergibt.

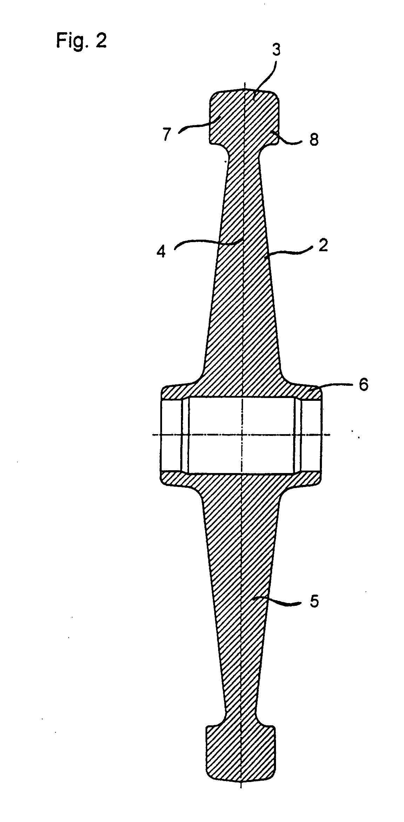

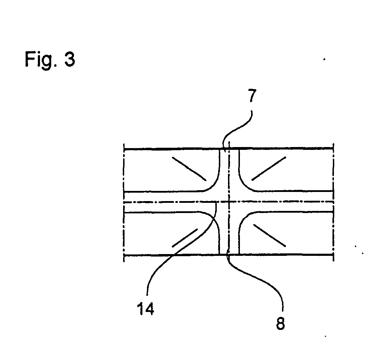

Die Kurzseiten 12 bzw. Schneide sowohl der Ansätze 7, 8 wie auch des Außenreifes 3 weisen eine Breite von rund 10 mm auf. Entsprechendes ist sowohl Fig. 2 wie auch Fig. 3 zu entnehmen. Die sich ergebende Schneide 14 ist damit gezielt abgestumpft, was insbesondere Fig. 3 verdeutlicht.

Fig. 2 ist zu entnehmen, daß der besonders geformte Ring 2 verhältnismäßig schmal baut. Er verfügt nämlich zusammen mit den Ansätzen 7, 8 und dem Außenreif 3 nur über eine Breite von rund 50 mm. Das stumpfe Ringprofil ist für die Bodenrückverfestigung besonders gut geeignet. Eine der Speichen 5 ist mit einer Hersteller-Kennzeichnung 15 versehen.

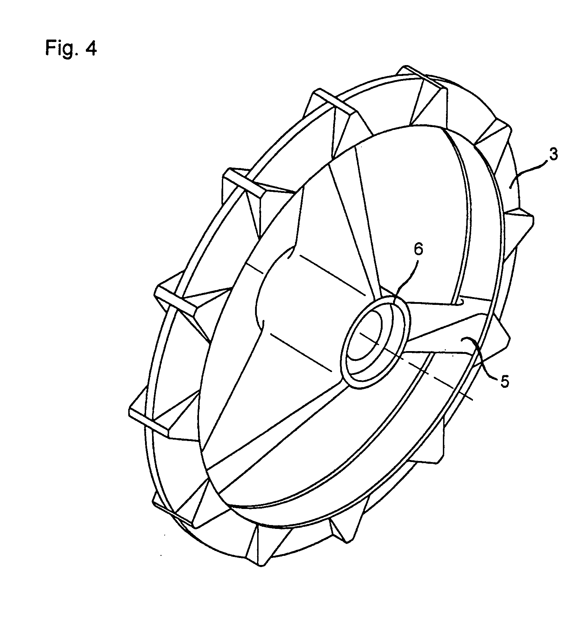

Fig. 4 zeigt den Ring in dreidimensionaler Ansicht, wobei auch die besondere Formgebung der Speichen erkennbar wird.

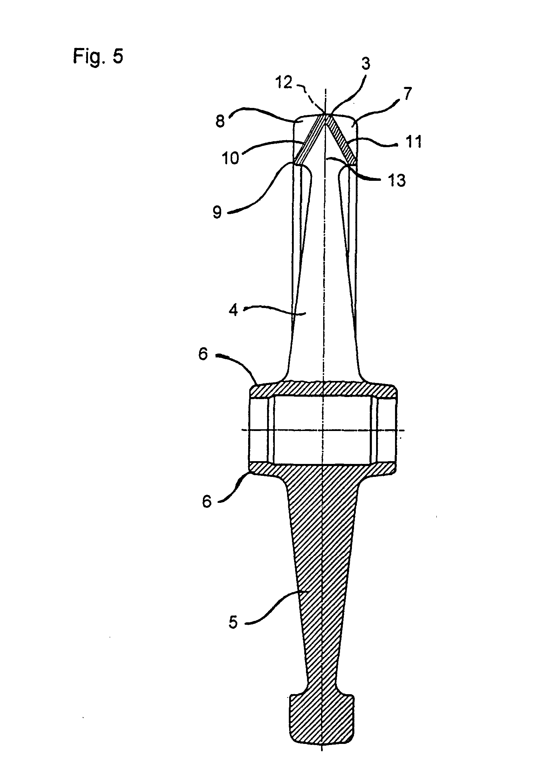

Fig. 5 zeigt einen Längsschnitt des Ringes 2 außerhalb des Speichenbereiches, der ergänzend verdeutlicht, daß der Außenreif 3 hohl ausgebildt ist.

## Patentansprüche

1. Walze für die Bodenbearbeitung mit mehreren, um eine Achse drehbaren Ringen (2), deren schneidenförmig geformter Außenreif (3) über Speichen (4, 5) mit der die Achse aufnehmenden Nabe (6) verbunden ist und über in Achsrichtung beidseitig vom Außenreif (3) abstehende und über den Umfang verteilt angeordnete Ansätze (7, 8) verfügt,
**dadurch gekennzeichnet,**
daß der schneidenförmige Außenreif (3) einen trapezförmigen Querschnitt aufweist, wobei die Schrägflanken (10, 11) unter Belassung einer Kurzseite (12) einen eine abgestumpfte Schneide (14) bildenden Winkel von 50 - 70° einschließen und die Ansätze (7, 8) annähernd den gleichen Querschnitt aufweisend ausgebildet sind.

2. Walze nach Anspruch 1,
**dadurch gekennzeichnet,**
daß der Außenreif (3) einen im Bereich der Längsseite (13) offenen Querschnitt aufweist.

3. Walze nach Anspruch 1,
**dadurch gekennzeichnet,**
daß die Schrägflanken (10, 11) einen Winkel von 60° einschließend ausgebildet sind.

4. Walze nach Anspruch 1,
**dadurch gekennzeichnet,**
daß die Kurzseite (12) eine Länge von 5 bis 15 mm, vorzugsweise von 10 mm aufweist.

5. Walze nach Anspruch 1 bis Anspruch 4,
**dadurch gekennzeichnet,**
daß die Breite von Außenreif (3) und Ansätzen (7, 8) 40 bis 70 mm, vorzugsweise 50 mm beträgt.

6. Walze nach Anspruch 1,
**dadurch gekennzeichnet,**
daß der Ring (2) nicht mehr als vier, vorzugsweise nur drei Speichen (4, 5) aufweist.

7. Walze nach Anspruch 1 und Anspruch 6,
**dadurch gekennzeichnet,**
daß die Speichen (4, 5) schlank ausgebildet sind, wobei sie im Nabenbereich in Achsrichtung breiter ausgebildet sind als quer zur Achsrichtung.

8. Walze nach Anspruch 1 bis Anspruch 7,
**dadurch gekennzeichnet,**
daß der Ring (2) einen Außendurchmesser von nicht mehr als 600 mm, vorzugsweise von 500 mm aufweist.

9. Walze nach Anspruch 1 bis Anspruch 8,
**dadurch gekennzeichnet,**
daß der hohl ausgebildete Ring (2) eine Wandstärke von 5 bis 9 mm, vorzugsweise 7 mm aufweist.

## Claims

1. Roller for soil cultivation with a plurality of rings (2) which can be rotated about an axis and of which the cutter-shaped outer hoop (3) is connected via spokes (4, 5) to the hub (6) containing the axis and has peripherally distributed projections (7, 8) protruding in the axial direction on the two sides of the outer hoop (3), characterised in that the cutter-shaped outer hoop (3) has a trapezoidal cross-section, wherein the inclined edges (10, 11) enclose an angle of 50 to 70° forming a truncated cutter (14) leaving a short side (12), and the projections (7, 8) are designed to have approximately the same cross-section.

2. Roller according to claim 1, characterised in that the outer hoop (3) has an open cross-section in the region of the long side (13).

3. Roller according to claim 1, characterised in that the inclined edges (10, 11) are designed to enclose an angle of 60°.

4. Roller according to claim 1, characterised in that the short side (12) has a length of 5 to 15 mm, preferably 10 mm.

5. Roller according to claim 1 to claim 4, characterised in that the width of the outer hoop (3) and projections (7, 8) is 40 to 70 mm, preferably 50 mm.

6. Roller according to claim 1, characterised in that the ring (2) has no more than four, preferably only three spokes (4, 5).

7. Roller according to claim 1 and claim 6, characterised in that the spokes (4, 5) are slim in design, wherein, in the hub region, they are wider in design in the axial direction than transverse to the axial direction.

8. Roller according to claim 1 to claim 7, characterised in that the ring (2) has an external diameter of no more than 600 mm, preferably of 500 mm.

9. Roller according to claim 1 to claim 8, characterised in that the ring (2) which is hollow in design has a wall thickness of 5 to 9 mm, preferably 7 mm.

## Revendications

1. Rouleau pour le travail du sol, comportant plusieurs anneaux (2) pouvant tourner autour d'un axe et dont le bord extérieur (3) agencé sous la forme d'un tranchant, est relié au moyen de rayons (4, 5) au moyeu (6) logeant l'axe et comporte des appendices saillants (7, 8) qui font saillie des deux côtés du bord extérieur (3), dans la direction axiale, et sont répartis sur la périphérie,
caractérisé en ce
que le bord extérieur en forme de tranchant (3) possède une section transversale de forme trapézoïdale, les flancs obliques (10, 11) faisant un angle de 50 à 70°, qui définit un tranchant émoussé (14), en délimitant un côté court (12), et que les appendices saillants (7, 8) sont agencés de manière à posséder approximativement la même section transversale.

2. Rouleau selon la revendication 1, caractérisé en ce
que le bord extérieur (3) possède une section transversale ouverte au niveau du côté longitudinal (13).

3. Rouleau selon la revendication 1, caractérisé en ce
que les flancs obliques (10, 11) sont agencés de manière à définir un angle de 60°.

4. Rouleau selon la revendication 1, caractérisé en ce
que le côté court (12) possède une longueur comprise entre 5 et 15 mm, de préférence égale à 10 mm.

5. Rouleau selon les revendications 1 à 4,
caractérisé en ce
que la largeur du bord extérieur (3) et des appendices saillants (7, 8) est comprise entre 40 et 70 mm et est de préférence égale à 50 mm.

6. Rouleau selon la revendication 1, caractérisé en ce
que l'anneau (2) ne possède pas plus de quatre rayons (4, 5) et de préférence possède seulement trois rayons (4, 5).

7. Rouleau selon la revendication 1 et la revendication 6, caractérisé en ce
que les rayons (4, 5) ont une forme élancée et possèdent dans la zone du moyeu une largeur plus importante dans la direction axiale que transversalement par rapport à la direction axiale.

8. Rouleau selon les revendications 1 à 7,
caractérisé en ce
que l'anneau (2) possède un diamètre extérieur non supérieur à 600 mm, et de préférence égal à 500 mm.

9. Rouleau selon les revendications 1 à 8,
caractérisé en ce
que l'anneau (2) agencé avec une forme creuse possède une épaisseur de paroi comprise entre 5 et 9 mm, et de préférence égale à 7 mm.
